# FASCICULE DE BREVET EUROPEEN

(11) **EP 1 054 332 B1**
(45) Date de publication et mention de la délivrance du brevet: **17.04.2013**
(21) Numéro de dépôt: 00401375.1
(22) Date de dépôt: 19.05.2000
(51) Int. Cl.: G06F 17/30

(54) **Système et procédé de gestion d'attributs dans un environnement orienté objet**
System und Verfahren zur Verwaltung von Attributen in einer objekt-orientierten Umgebung
System and method for managing attributes in an object-oriented environment

(30) Priorité: 19.05.1999 FR 9906353
(43) Date de publication de la demande: 22.11.2000
(73) Titulaire: EVIDIAN, 78340 Les Clayes sous Bois (FR)
(72) Inventeur: Caubit, Pierre, 49000 Angers (FR)
(74) Mandataire: Bonnet, Michel

(56) Documents cités:
- "Universal Data Option for Informix Dynamic Server" INFORMIX CORPORATION, [en ligne] 1998, pages 1-8, XP002128177 Extrait de l'Internet: <URL:http://www.informix.com/informix/tech briefs/udo/udo.pdf> [extrait le 2000-01-14]
- REINWALD B ET AL: "STORING AND USING OBJECTS IN A RELATIONAL DATABASE" IBM SYSTEMS JOURNAL,US,IBM CORP. ARMONK, NEW YORK, vol. 35, no. 2, 1 mars 1996 (1996-03-01), pages 172-190, XP000594128 ISSN: 0018-8670
- BLIUJUTE R ET AL: "Developing a DataBlade for a new index" PROCEEDINGS 15TH INTERNATIONAL CONFERENCE ON DATA ENGINEERING (CAT. NO.99CB36337), PROCEEDINGS OF IEEE COMPUTER SOCIETY 15TH INTERNATIONAL CONFERENCE ON DATA ENGINEERING, SYDNEY, NSW, AUSTRALIA, 23-26 MARCH 1999, pages 314-323, XP002131457 1999, Los Alamitos, CA, USA, IEEE Comput. Soc, USA ISBN: 0-7695-0071-4

## Description

La présente invention concerne le domaine des bases de données dans un environnement d'ordinateur orienté objet.

### L'art antérieur

Une base de données, un annuaire ou équivalent organise de manière cohérente des objets partagés par des utilisateurs ou des applications.

Un objet est une abstraction d'une donnée du monde réel. L'objet est caractérisé par une identité, un état et un comportement. L'identité d'un objet est représenté par un identifiant unique et invariant qui permet de référencer l'objet indépendamment des autres objets. Les valeurs de l'état d'un objet sont données par des attributs. Le comportement d'un objet est défini par un ensemble d'opérations applicables à l'objet. Les objets similaires sont groupés en classe. Une classe décrit la structure et le comportement commun d'objets. Les objets et les attributs sont définis dans un schéma de la base.

Dans les bases de données actuelles, tous les attributs sont déclarés dans le schéma de la base.

Or, la complexité et l'évolution rapide des informations contenues dans une base de données soulèvent de nombreux problèmes :

La description du schéma de la base est fréquemment modifiée ce qui nécessite une gestion permanente et coûteuse de la base et entraîne une gêne pour les utilisateurs et administrateurs.

Des objets de versions différentes sont susceptibles d'être gérés par une même base. Le problème de gestion de versions se complique avec la réplication des bases dans un environnement distribué et plus particulièrement lorsque les différentes versions se situent sur des machines différentes.

L'utilisateur a souvent besoin d'accéder rapidement à une suite d'attributs d'un objet donné. La base est sollicitée pour la recherche de chacun des attributs. Il en résulte un encombrement dans la consultation de la base, une lenteur dans l'obtention d'une réponse à une interrogation.

Il serait avantageux que des composants de types différents (chaîne de caractères, entier, booléen...) soient stockés dans un même attribut, ce qui n'est pas réalisable avec les systèmes actuels connus.

L'origine, l'intégrité ou la confidentialité des informations stockées dans la base ne sont garanties qu'après application de techniques diverses sur les attributs, techniques rapportées, lourdes et coûteuses.

Ainsi, le document *Universal Data Option for Informix Dynamic Server,* publié en 1998, présente une solution qui met en avant une base de données dont les informations sont accessibles pour être gérées par un utilisateur plus rapidement notamment grâce à des composants intégrés dans ces données. Néanmoins, il convient de remarquer que ce document ne fournit aucune information quand à l'organisation de ces composants intégrés ni quand au fonctionnement du système de gestion proposé.

Le document "Storing and using objects in a relational database", de Reinwald et al, IBM systems Journal, vol. 35, n°2, 1er mars 1996, décrit un système de gestion de base de données relationnelle adapté pour obtenir une base orientée objet. Plus précisément, ce document décrit comment des objets C⁺⁺ sont intégrés à la base par insertion dans des colonnes spécifiques de tables de cette base, et enregistrés dans un schéma persistant qui est stocké dans la base de données des schémas. Ces objets peuvent alors être considérés comme caractérisés par des attributs spécifiques, dits opaques, dont la structure interne est indépendante de la base de données sous-jacente et connue uniquement des applications qui peuvent interroger la base grâce à des APIs d'une interface, SMRC, permettant de stocker des objets C⁺⁺ dans la base dans le même format binaire que celui dans lequel ils ont été créés.

Un but de la présente invention est de permettre de modifier facilement et rapidement les informations associées à une classe d'objets caractérisés par des attributs opaques.

Un autre but de la présente invention est d'accéder rapidement à une suite d'attributs opaques.

Un autre but est d'intégrer des composants de différents types dans un même attribut opaque.

Un autre but de la présente invention est d'administrer la cohabitation d'objets de versions différentes dans une même base ou des bases répliquées.

Un autre but est de garantir l'origine, l'intégrité et la confidentialité de l'information sans recours à des techniques rapportées.

### Résumé de l'invention

Dans ce contexte, la présente invention propose un procédé de gestion d'une base de données ou annuaire tel que défini dans la revendication 1.

La présente invention concerne également un système informatique de mise en oeuvre du procédé selon l'invention.

Ainsi, selon l'invention, la lecture des composants d'un attribut opaque ne nécessite pas l'accès et le chargement d'une description compilée puisque sa structure interne est au moins partiellement auto-définie, réduisant la taille mémoire nécessaire pour l'exploitation, au moins en lecture, de la base de données.

### Présentation des figures

D'autres caractéristiques et avantages de l'invention apparaîtront à la lumière de la description qui suit, donnée à titre d'exemple illustratif et non limitatif de la présente invention, en référence aux dessins annexés dans lesquels:
- la figure 1 est une vue schématique du système selon la présente invention ;
- la figure 2 représente de manière schématique la structure d'un attribut opaque du système selon la figure 1 ;
- la figure 3 représente de manière schématique des étapes du procédé selon la présente invention.

### Description d'une forme de réalisation de l'invention

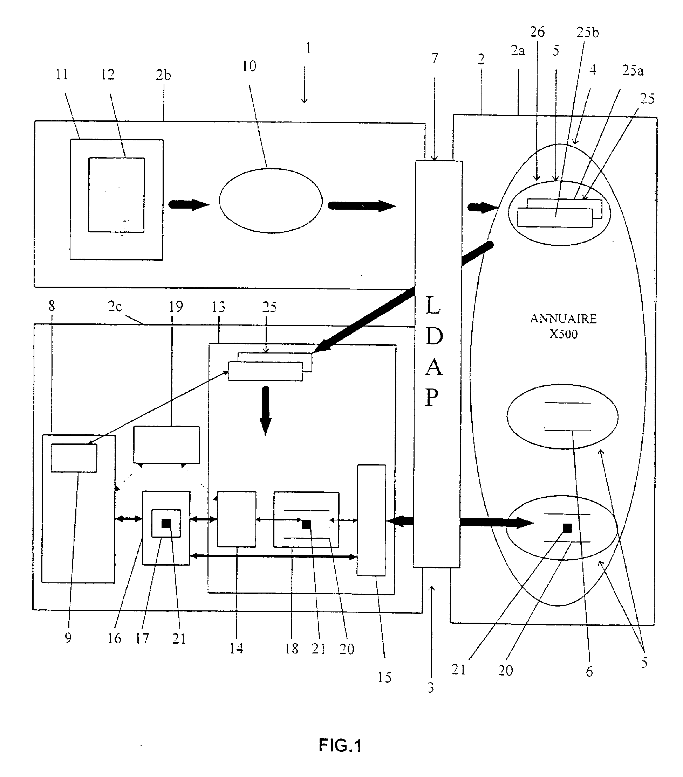

Comme représenté sur la figure 1, la présente invention se rapporte à un système d'information 1 dont l'environnement est de type orienté objet. Le système 1 comporte au moins une machine 2. Le terme « machine » est utilisé dans un sens général pour désigner tout type d'ordinateurs ou équivalents.

Le système 1 peut être un système dont l'environnement est de type distribué ou local. Dans la forme de réalisation illustrée sur la figure 1, le système 1 de type distribué comprend trois machines 2a, 2b, 2c, appelées respectivement machine 2a annuaire, machine 2b de stockage, machine 2c d'administration. Seuls les composants des machines 2 du système 1 caractéristiques de la présente invention seront décrits, les autres composants étant connus de l'homme du métier. Les machines 2 sont reliées entre elles au travers d'un réseau 3 ; dans la forme de réalisation de la figure 1, la machine 2a est reliée aux machines 2b et 2c par le réseau 3.

Le système 1 comporte une base de données ou un annuaire 4 ou équivalent installé sur la machine 2a annuaire. Dans la description qui suit, il sera fait référence à l'annuaire 4. L'annuaire 4 contient des objets 5 caractérisés par des attributs de type connu dits attributs standards 6. Dans l'exemple illustré sur la figure 1, les informations sont structurées en objets 5 intégrés dans l'annuaire 4 suivant le modèle X500 connu ; la machine 2a annuaire communique avec les machines 2b de stockage et 2c d'administration au travers d'une interface 7 LDAP.

Des utilisateurs ou des applications diverses ou autres, appelés ci-après entités 8 sont susceptibles d'interroger l'annuaire 4 directement sur la machine 2a annuaire l'hébergeant ou à partir d'autres machines 2b, 2c. Dans l'exemple illustré sur la figure 1, une application 8 est installée sur la machine 2c d'administration et travaille avec les données de l'annuaire 4. Selon une forme de réalisation particulière, l'application 8 est munie d'une interface graphique 9.

L'une des machines 2a, 2b ou 2c du système 1 (machine 2b de stockage sur la figure 1) comprend un compilateur 10 de description et des moyens de stockage 11 d'au moins un fichier 12 source de description.

L'une des machines 2a, 2b ou 2c du système 1 (machine 2c d'administration sur la figure 1) comprend une interface de programmation au niveau applicatif, appelée couramment interface API 13 munie d'au moins une fonction 14 de gestion et d'au moins une fonction 15 d'accès à l'annuaire 4, des moyens 16 de mémorisation d'une structure 17 de communication entre l'interface API 13 et l'entité 8, une mémoire tampon 18, un module de sécurité 19.

Le procédé selon la présente invention consiste à caractériser les objets 5 par des attributs spécifiques 20 dits attributs opaques 20, présentant la même structure externe que les attributs standards 6 et dont la structure interne permet de définir et administrer des composants 21 de manière indépendante à l'annuaire 4.

Les structures des attributs standards 6 sont de trois types : de type texte directement lisible par l'interface 7, de type binaire représentant une unique information d'un type déterminé qui n'est pas directement lisible par l'interface 7, de type spécialisé requérant des contrôles de syntaxe.

Le terme « structure externe » signifie que la structure de l'attribut opaque 20 telle que vue par l'annuaire 4 et l'interface 7 est identique à la structure d'un attribut standard 6. Pour l'annuaire 4 et l'interface 7, les attributs opaques 20 présentent une structure externe de type binaire. Un attribut opaque 20 est considéré par l'interface 7 entre l'entité 8 et l'annuaire 4 comme un attribut standard 6.

L'attribut opaque 20 est comparable à un container : des composants 21 sont introduits dans le container. Les composants 21 sont indépendants de la technologie ou de l'organisation de l'annuaire 4. Il est possible de rajouter des composants 21 dans l'attribut opaque 20 sans modifier le schéma de l'annuaire 4. Les composants 21 introduits dans l'attribut opaque 20 peuvent être de types variés.

L'objet 5 est identifié de manière unique dans l'annuaire 4: les attributs opaques 20 sont créés à chaque besoin spécifique d'une entité 8. Le contenu des attributs opaques 20 dépend de l'entité 8 contrairement à celui des attributs standards 6 dépendant de l'annuaire 4 et de son schéma de base.

L'attribut opaque, de type binaire pour l'interface 7, présente une structure interne déterminée susceptible d'être exploitée par l'interface API 13, structure dans laquelle divers types de composants 21 sont classés.

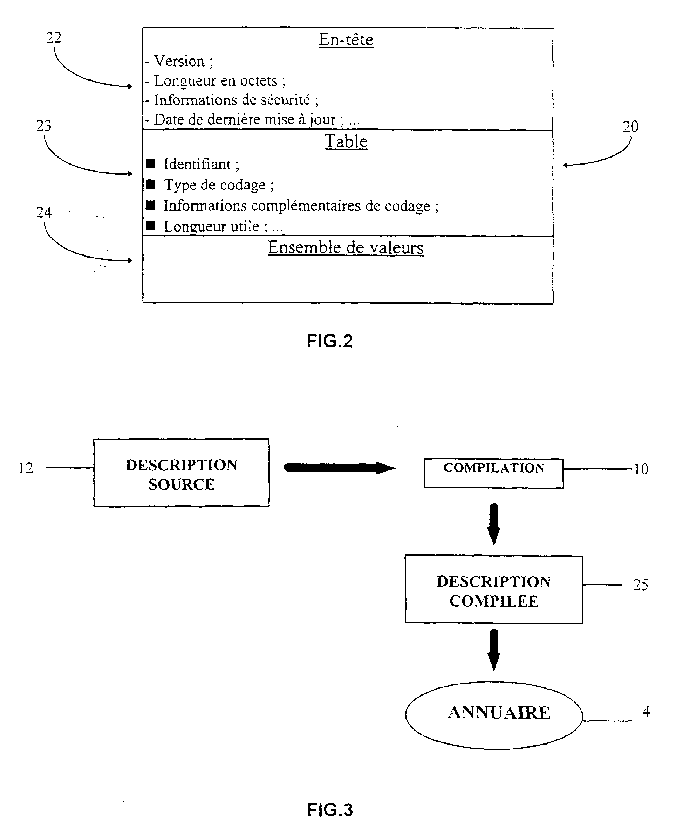

Selon l'invention telle qu'illustrée sur la figure 2, la structure interne de l'attribut opaque 20 est constituée de trois parties :
- un en-tête 22 ;
- une table 23 de caractéristiques des composants 21 ;
- un ensemble 24 de valeurs des composants 21.

La structure interne de l'attribut opaque est prédéfinie de manière à retrouver les composants 21 dans les informations de type binaire de l'attribut opaque 20 comme vu plus haut.

L'en-tête 22 fournit des informations générales sur l'attribut opaque 20 concerné telles que :
- une version du formalisme de la structure utilisée pour l'attribut opaque 20 et pour les composants 21 contenus dans l'attribut opaque 20 concerné. La version assure une évolution de la structure de l'objet et permet la compatibilité montante et descendante des structures comme il sera vu plus loin ;
- une longueur en octets des données suivantes de l'en-tête (informations de sécurité, date de dernière mise à jour ...) de manière à retrouver la table 23 dans les données binaires de l'attribut, comme vu plus haut ;
- des informations de sécurité assurant l'intégrité, l'origine et la confidentialité des composants contenus dans l'attribut opaque. Les attributs sont protégés d'altérations ou d'extractions non souhaitées. Des services de signature et/ou de chiffrement sont susceptibles d'être mis en oeuvre. Les informations de sécurité permettent la signature de l'attribut de manière globale, ce qui améliore les performances. Les informations de sécurité sont par exemple l'indication d'une signature souhaitée ou non pour l'attribut, l'indication d'un chiffrement souhaité pour tous les composants de l'attribut ou seulement certains d'entre eux ou encore non souhaité, la force des algorithmes utilisés, les algorithmes utilisés (signature DSA, RSA... ; chiffrement DES, IDEA...), l'état des composants de l'attribut dans l'ensemble 24 (signé ou non, chiffré ou non), la clé utilisée, la valeur de la signature,...
- une date de dernière mise à jour de l'attribut opaque 20 concerné ; ...

La table 23 indique les caractéristiques des composants 21 contenus dans l'attribut opaque 20 en question. Les caractéristiques des composants 21 permettent notamment de retrouver un composant 21 déterminé dans l'ensemble 24 des composants 21. La table 23 comprend :
- l'identifiant d'un composant 21 sous la forme par exemple d'un numéro d'identification ;
- un type de codage du composant 21 concerné. Le type de codage décrit le mode de représentation des composants 21 dans l'attribut opaque 20. L'attribut opaque est susceptible de contenir des composants de types variés. Le type permet le contrôle du stockage des composants 21 dans l'attribut opaque 20, l'organisation des composants 21 en liste ;
- des informations complémentaires de codage comme par exemple des informations concernant le type multimédia ;
- une longueur utile de valeur du composant 21 concerné exprimée en octets ; ...

Les composants 21 sont stockés dans l'ensemble 24 les uns à la suite des autres dans l'ordre dans lequel ils ont été cités dans la table 23. L'identifiant et la longueur utile indiqués dans la table 23 permettent de retrouver un composant 21 déterminé dans l'ensemble 24.

L'attribut opaque 20 permet de regrouper des composants 21 de types différents et de permettre l'ajout, la modification ou la suppression d'un attribut 6, 20 et/ou d'un composant 21 sans intervenir sur le schéma de l'annuaire 4.

Selon une forme de réalisation, les types de codage déterminés dans la table 23 se divisent en trois catégories : les types simples, les types multimédia, les types constructeurs.

Les types simples comprennent le type texte (« TEXT » en annexe) qui correspond à une chaîne de caractères (texte quelconque), le type entier de valeur binaire, le type numérique (caractères numériques de 0 à 9), le type bit qui correspond à un champ d'octets, le type booléen (valeur vrai ou faux), le type énuméré dont la valeur est associée à une constante, le type secret (texte spécial de type chiffré et de longueur quelconque), le type date/heure (format de date/heure établi).

Les types multimédia comportent le type image, le type son et le type vidéo.

Les types constructeurs introduisent et délimitent des structures telles que des listes. Le type liste (« LIST » en annexe) représente une liste de n occurrences d'une structure, le nombre maximum d'occurrences étant fixé. Le type fin de liste (« END » en annexe) clôt la description d'une liste. Les types constructeurs autorisent l'imbrication des listes; n niveaux d'imbrication sont possibles. Des règles d'utilisation accompagnent les types constructeurs.

Tout autre type est susceptible d'être utilisé.

Les fonctions 15 d'accès permettent l'accès aux attributs 6, 20 de l'annuaire 4. Les fonctions 15 d'accès permettent d'extraire, d'introduire, de modifier ou de supprimer des attributs dans l'annuaire 4. Les fonctions 15 mettent les attributs extraits de l'annuaire 4 à la disposition des fonctions 14 de gestion dans la mémoire tampon 18. Les fonctions 14 de gestion créent, modifient, suppriment des attributs et/ou des composants et transmettent le résultat des opérations aux fonctions 15 d'accès par l'intermédiaire de la mémoire tampon 18 : les fonctions 15 d'accès introduisent les attributs et/ou composants créés ou modifiés par les fonctions 14 dans l'annuaire 4, ou encore suppriment de l'annuaire 4 les attributs et/ou composants supprimés par les fonctions 14 de gestion.

Les fonctions 14 de gestion sont prévues pour l'exploitation des attributs opaques 20 de manière indépendante à l'annuaire 4.

Les fonctions 14 de gestion permettent d'introduire ou de supprimer des attributs standards 6 dans des objets 5, des composants 21 dans des attributs opaques 20 ou des attributs opaques 20 dans des objets, de lire ou modifier des attributs standards 6 ou des composants 21 des attributs opaques 20, en s'appuyant si nécessaire sur une description 25 formelle compilée et stockée dans l'annuaire 4. Les fonctions 14 de gestion sont susceptibles de lire les composants 21 des attributs opaques 20 sans faire appel à la description 25 correspondante: les fonctions 14 de gestion doivent alors connaître l'identifiant du composant recherché (l'identifiant d'un attribut opaque est donné par la table 23 dudit attribut). L'attribut opaque contient le minimum d'informations permettant aux fonctions de gestion 14 de lire les composants qu'il contient sans informations supplémentaires. Il est à noter que la lecture est l'opération la plus fréquente statistiquement. Pour toute autre opération telle la création, la modification ou la suppression d'un attribut 6, 20 ou d'un composant 21, la fonction 14 de gestion requiert les informations de la description 25 compilée. Lors d'opérations de mise à jour (création, modification ou suppression), des contrôles sont nécessaires tels que des contrôles sur les longueurs, les types, les masques, les caractères obligatoires... : les contrôles s'appuient sur les informations comprises dans les descriptions 25 compilées.

Il est à noter que les informations contenues dans les descriptions 25 pourraient, selon une forme de réalisation de l'invention, être comprises dans les attributs opaques 20. Les descriptions 25 compilées améliorent les performances du système 1.

La description 25 de l'attribut opaque 20 est issue des fichiers source 12. Un fichier source 12 est réservé pour chaque description 25 et pour chaque version de la description 25. La compilation de la description 25 s'effectue à partir des fichiers source 12 au moyen du compilateur 10. La compilation améliore les performances de traitement.

La description 25 compilée apporte à l'entité 8 des informations relatives à un attribut opaque donné sans que l'entité ait à solliciter l'annuaire 4: le fichier source 12 contient des informations telles que le libellé externe de saisie du champ attribut ou composant « LBL » comme il sera vu plus loin, assurant une mise en forme automatique des formulaires de saisie de l'interface graphique 9 de l'entité 8 : l'interface 9 est générée automatiquement sans avoir recours aux attributs stockés dans l'annuaire 4. La même description 25 est utilisée pour la saisie de données extérieures au système 1 et la gestion de données appartenant à l'annuaire 4, ce qui assure une cohérence dans la gestion des informations.

Dans la forme de réalisation des figures 1 et 3, les fichiers source 12 sont enregistrés dans la machine 2b de stockage. Le compilateur 10 de la machine 2b transforme le fichier source contenu dans les moyens de stockage 11 en une description 25 compilée stockée dans l'annuaire 4 de la machine 2a annuaire. La description compilée liée à un objet 5 donné est stockée par exemple (figure 1) dans un objet 26 spécial. Le fichier compilé bénéficie des capacités de distribution des technologies d'annuaires.

La description 25 compilée permet une évolution en douceur du contenu des objets. Selon un exemple de forme de réalisation, la description 25 comporte, comme il sera vu plus loin, le numéro de version du contenu de l'objet 5 concerné : l'évolution de structure des objets 5 est gérée à l'aide de numéros croissants de version.

La gestion des versions est rendue souple et efficace. L'annuaire 4 peut évoluer sans cesse sans remettre en cause les objets existants et le schéma de l'annuaire. La gestion des versions est assurée par les fonctions 14 de gestion lors de la création ou suppression d'objets 5 dans l'annuaire 4.

Selon un exemple de réalisation de la gestion des versions, il est prévu une compatibilité montante entre la description 25 d'un objet 5 et l'objet 5 effectif existant (objet 5 de version V et description 25 de version V+n):

Dans ce cas, afin d'assurer une totale compatibilité, c'est à dire une évolution de la structure des objets 5 sans remettre en cause les objets existants, les règles suivantes sont appliquées dans les fonctions de gestion 14 :
- Si un nouveau composant 21 apparaît dans la description 25, il est visible pour l'entité 8 et indiqué comme absent dans l'objet 5 courant mais ajouté en mise à jour par la fonction de gestion 14 concernée ;
- Si un composant 21 disparaît de la description 25, il n'est plus visible pour l'entité 8 et est supprimé de l'objet 5 à la mise à jour par la fonction de gestion 14 concernée.

Il est également prévu une compatibilité descendante entre la description d'un objet et l'objet effectif existant (objet de version V et description de version V-n) :

Cette situation intervient dans des périodes transitoires de déploiement d'une nouvelle version de description d'objet, et de différences dues à la réplication des objets.

Dans ce cas, une compatibilité minimum est assurée, permettant un fonctionnement transitoire, en attendant la mise à niveau de la description.

Les règles suivantes sont appliquées :
- Si un composant 21 est présent dans la description 25 mais ne l'est plus dans l'objet 5, le composant 21 est considéré comme absent de la description ;
- Si un composant est absent de la description mais présent dans l'objet, il est considéré comme présent dans la description, accessible dans l'annuaire 4 au moyen de l'identifiant mais pas du nom interne qui n'est défini que dans la description.

Les modifications à apporter au schéma de l'annuaire 4 sont limitées : les évolutions sont déportées hors de l'annuaire 4.

Dans la forme de réalisation de la figure 1, les attributs d'une classe d'objets 5 sont regroupés en items. Une classe d'objets peut contenir plusieurs items. Dans la forme de réalisation décrite, un item est constitué d'au moins un attribut standard 6 et/ou d'un seul attribut opaque 20. Un attribut standard 6 ou un composant 21 dans un item est appelé dans ce qui suit un élément de l'item.

D'autres items sont susceptibles d'être créés.

Les descriptions 25 sont de deux types :
- les descriptions 25a d'items ;
- les descriptions 25b d'attributs.

L'annexe 1 montre un exemple de description 25 d'items et d'attributs.

La description 25a d'items est référencée sous la forme <Classe> - <Item >, <Classe> représente la classe de l'objet 5 concerné, <Item> l'item concerné (ensemble de composants d'un attribut opaque ou ensemble d'attributs standards dans ladite classe d'objets en question). Les items cités sont déclarés au préalable comme appartenant à la classe d'objets correspondante dans l'annuaire 4. Un fichier source 12 peut comporter une description d'items et une suite de descriptions d'attributs correspondants.

La description 25 d'items comprend les informations suivantes :
- la classe de l'objet concerné, appelée « CLASS ». Les classes sont identifiées par des mots clés réservés.
- les items déclarés dans un objet qui dépendent de la classe de l'objet en question, appelés « ITEM ». Une classe d'objets est constituée de plusieurs items. Pour chaque classe, la liste des items qu'il doit/peut contenir est définie. A chaque type d'item est associé un identifiant unique. Dans la forme de réalisation décrite, les identifiants sont :
   - « BASE »: attributs standards 6 ;
   - « XXX » (tout terme différent du terme BASE utilisé pour les attributs standards) : attributs opaques 20.
- la version de la description de l'item, appelée « VERSION ». Cette information est très importante : elle assure une évolution compatible de la description des items.
- la liste des langues à utiliser, appelée « LANGUAGES » telles que par exemple la langue utilisée pour les libellés d'attributs, ... ; une description requiert au moins une langue. Si une des langues n'est pas fournie explicitement pour un attribut, on prend par défaut la première langue définie dans la description pour l'attribut en question.

La description 25 d'items peut également comprendre des informations de sécurité optionnelles. Les informations sont dites optionnelles car elles impliquent une option par défaut en cas d'absence. Les informations de sécurité sont définies dans l'en-tête 22 de l'attribut opaque 20 et/ou dans la description 25a d'items selon les besoins (options de sécurité générales et/ou pour seulement certains attributs). La protection des attributs opaques 20 s'effectue par chiffrement et/ou signature. Par défaut, par exemple, les attributs opaques ne sont ni signés ni chiffrés. Les paramètres optionnels de la description 25a autorisent la modification des valeurs de protection par défaut.

Selon une forme de réalisation, les paramètres optionnels sont :
- la signature de l'attribut en question ;
- le chiffrement de l'attribut concerné ; dans le cas d'un chiffrement requis, les composants 21 de type secret ne sont pas chiffrés individuellement.
- le niveau de chiffrement pour l'attribut en question.

La description 25b d'attributs permet :
- d'identifier chaque élément de l'objet concerné par un nom interne et un identifiant, d'indiquer la correspondance entre le nom interne et l'identifiant pour un élément donné ;
- de définir les types des éléments de l'objet concerné ;
- de fournir des informations utilisables par les fonctions de gestion 14 des éléments 21 ou directement par l'entité 8 (interface graphique 9) telles que :
   - un libellé(s) du champ de saisie de l'élément ;
   - une indication du statut obligatoire ou optionnel de l'élément ;
   - une taille minimum / maximum ;
   - des contraintes sur l'élément ;
   - des informations complémentaires sur l'élément.

La description comprend :
- le nom interne de l'élément concerné, appelé « ATT ». Le nom interne permet de nommer simplement un élément (attribut standard 6 / composant 21 d'un attribut opaque 20). Il sert de référence pour la gestion ultérieure des descriptions d'items et pour l'administration de l'annuaire 4. Le nom interne est indépendant du nom défini dans le schéma de l'annuaire 4. Le nom interne identifie chaque élément ; il est unique pour un objet 5 donné. Selon un exemple illustratif, le nom est donné sur 12 caractères maximum. Le nom doit commencer sur le premier caractère de la ligne ;
- l'identifiant, appelé l'OID. L'identifiant identifie chaque élément ; il est unique pour un item donné. L'identifiant est indépendant de l'identification dans l'annuaire 4.
- le nom de l'élément dans l'annuaire 4 utilisé par l'interface 7 et obligatoire dans la description des attributs 6 standards, appelé « XNM ». Il est codé par exemple sur 36 caractères maximum ;
- l'indication de l'état de l'élément au niveau de l'entité 8, appelé « HID ». L'état de l'élément peut prendre les valeurs cachés ou visibles. L'HID est déclaré avant les options qui suivent ;
- le libellé externe de saisie du champ élément tel que présenté au niveau de l'entité 8, appelé « LBL » ;
- le type de codage de l'élément parmi ceux énoncés précédemment, appelé « TYP ».

D'autres options sont susceptibles d'être utilisées telles que par exemple des options qui sont fonction du type de codage de l'élément. Quelques exemples sont donnés ci-après permettant de comprendre l'exemple de fichiers source donné en annexe.
- l'option « MDT » détermine le statut obligatoire ou optionnel de l'élément ;
- l'option « RNG » représente la plage de longueur (chaîne de caractères, numérique, secret) ou de valeur (entier), ou le nombre d'occurrences minimal et maximal (type constructeur).
- l'option « SZF » définit la taille du champ de saisie pour l'interface graphique 9 de l'entité 8.
- « CAS » définit la casse pour les types chaînes de caractères ;
   « FREE », la casse est respectée ;
   « UP », les majuscules sont forcées ;
   « LOW », les minuscules sont forcées.

Les informations données par la description telles que l'option SZF par exemple permettent la mise en forme automatique (sans avoir recours à des modules supplémentaires) des formulaires de saisie de l'interface graphique.

Des options sont à prévoir également par exemple pour les types multimédia tels que :
- l'option « PLD » indiquant le préchargement automatique des types multimédias dans la structure.
- l'option « ALG » qui est un identifiant d'algorithme.
Les identifiants d'algorithme pour le type image sont par exemple :

| | |
|---|---|
| 0 | GIF |
| 1 | JPG |
| 2 | TIF (fractales) |
| 3 | Ondelettes |

Des identifiants sont également déterminés pour les types sons et vidéo.

La manipulation des éléments s'effectue à l'aide des fonctions de gestion 14 en précisant l'item. L'item doit être précisé à l'appel afin que les fonctions déterminent la structure concernée par l'opération à effectuer.

Les fonctions de gestion 14 permettent de manipuler (créer, lire, modifier, supprimer, afficher) les données suivantes :
- attributs standards des objets de l'annuaire 4 ;
- attributs opaques des objets de l'annuaire 4 et composants 21 de ces attributs ;
- composants de sécurité de base intégrés dans des attributs des objets 5...

Les éléments manipulés par les entités 8 sont contrôlés, filtrés par les fonctions 14 de gestion.

Si la fonction de gestion 14 appelée nécessite les descriptions 25a et b compilées de l'objet, lesdites descriptions sont chargées automatiquement par la fonction de gestion en question. Selon une forme de réalisation particulière de réalisation, les descriptions compilées sont chargées dans la mémoire tampon 18. Les fonctions de gestion 14 puisent dans les descriptions compilées les informations nécessaires aux opérations qu'elles doivent effectuer. Les fonctions de gestion 14 s'appuient sur la description 25a d'item pour connaître la classe d'objet et l'item concernés.

Les fonctions de gestion dans la forme de réalisation décrite sont les suivantes :
- une fonction d'initialisation d'objets InitObj : l'appel à cette fonction permet d'initialiser la structure d'un nouvel objet ainsi que la structure d'attributs 6,20 de l'objet créé de manière à pouvoir y insérer des attributs standards 6 ou des composants 21. L'objet 5 est défini à l'appel de la fonction d'initialisation en précisant la classe de l'objet, l'item correspondant.
- une fonction de rangement PutElem : la fonction de rangement réalise la création ou mise à jour d'un attribut 6,20 ou d'un composant 21 d'un attribut opaque 20. A l'appel de la fonction de rangement sont précisés la version, la classe, l'identifiant ou le nom de l'élément, l'occurrence en cas de liste, la longueur utile dans le cas de types bit ou secret, le type de codage de l'élément. La fonction de rangement actualise pour chaque objet traité une liste des attributs modifiées afin d'optimiser la mise à jour.
- une fonction de lecture GetElem : la fonction de lecture assure l'extraction d'un attribut 6, 20 ou d'un composant 21 d'un attribut opaque 20 de l'annuaire 4. Si le composant demandé est recherché par son identifiant d'objets, la fonction de lecture n'a pas à charger la description compilée : la table 23 intégrée de l'attribut est suffisante. A l'appel de la fonction de lecture, sont précisés la version, la classe, l'identifiant ou le nom de l'élément, l'occurrence en cas de liste, la longueur utile dans le cas de types bit ou secret, le type de l'élément.
- une fonction de suppression RemElem : la fonction de suppression effectue la suppression de la valeur d'un attribut 6,20 ou d'un composant 21 d'un attribut opaque 20, d'une occurrence d'une liste de composants dans un objet. A l'appel de la fonction de suppression, sont précisés la version, la classe, l'identifiant ou le nom de l'élément, l'occurrence en cas de liste, la longueur utile dans le cas de types bit ou secret, le type de codage de l'élément.
- une fonction de vérification CheckObj : la fonction de vérification vérifie les attributs 6,20 d'un objet et les composants 21 d'un attribut opaque 20 avant validation d'une création ou d'une modification. La fonction de vérification permet le contrôle de présence obligatoire des attributs/composants. Elle peut être appelée par une entité 8, mais elle peut également être mise en oeuvre systématiquement. A l'appel de la fonction de vérification, sont précisés la version, la classe, l'identifiant ou le nom de l'élément, l'occurrence en cas de liste, la longueur utile dans le cas de types bit ou secret, le type de codage de l'élément.

L'entité 8 appelle une fonction 14 de gestion en plaçant les paramètres nécessaires à ladite fonction 14 dans la structure de communication 17. La structure de communication 17 se présente sous la forme d'une succession de tous les paramètres nécessaires à toutes les fonctions 14 de gestion. La fonction 14 de gestion appelée récupère dans la structure 17 de communication les valeurs de paramètres qui l'intéressent.

Les fonctions 14 de gestion renvoient un code retour indiquant si la fonction a été correctement effectuée, si une erreur est intervenue, si les paramètres d'appel sont corrects, si la description compilée a été retrouvée, si l'objet existe ...

Les fonctions 14 de gestion sont conçues de manière à suivre les règles de gestion de versions énoncées plus haut.

Les fonctions 14 de gestion permettent de lire une suite d'attributs/composants sans solliciter l'annuaire 4

Les fonctions 14 de gestion assurent le chiffrement/déchiffrement et la signature des composants 21 contenus dans l'attribut opaque 20. Les fonctions de gestion communiquent avec le module de sécurité 19 pour effectuer les opérations de sécurité (signature, chiffrement, ...) requises dans une description d'item 25 et/ou dans l'en-tête 22 d'un attribut opaque. Il est à noter que le module de sécurité 19 est indépendant : l'entité 8 peut faire appel directement au module de sécurité comme le montre la figure 1.

Le système 1 décrit fonctionne de la manière suivante :

Lorsque l'entité 8 souhaite créer un objet dans l'annuaire 4, l'entité 8 commence par appeler la fonction de gestion 14 d'initialisation : l'entité 8 introduit les paramètres d'appel suffisants dans la structure de communication 17. La fonction 14 d'initialisation extrait de ladite structure les paramètres qui lui sont nécessaires, charge la description 25 compilée correspondante dans la mémoire tampon 18 et crée la structure de départ d'objet souhaitée en définissant des valeurs par défaut. La structure est enregistrée dans la mémoire tampon 18. La structure créée, la fonction 14 d'initialisation indique à l'entité 8 que la structure est prête à recevoir des attributs standards 6 ou des composants 21 en renvoyant un code retour adapté dans la structure de communication 17. Comme indiqué plus haut, divers codes retour sont susceptibles d'être transmis à l'entité 8 pour lui indiquer l'état de fonctionnement. Lorsque l'entité détecte le code retour indiquant que la structure de départ a été créée, l'entité 8 appelle alors la fonction 14 de gestion de rangement: elle transmet à la structure de communication les caractéristiques des attributs standards 6 ou des composants 21 qu'elle souhaite introduire dans l'attribut opaque 20 concerné. La fonction 14 de rangement les récupère et remplit la structure d'objets précédemment créée dans la mémoire tampon 18 en s'appuyant sur la description compilée chargée. La fonction 14 de rangement peut également faire appel au module 19 de sécurité en cas de signature ou de chiffrement des informations contenues dans l'objet concerné. Lorsque l'objet est prêt à être transféré dans l'annuaire 4, l'entité 8 a le choix entre valider la création ou la vérifier sachant qu'en validant, l'opération de vérification est également réalisée. La vérification avant validation permet d'obtenir précisément toutes les erreurs réalisées. L'opération de vérification est effectuée par la fonction de gestion de vérification. Lorsque l'entité 8 valide la création, la fonction 15 d'accès transfère l'objet créé et renseigné dans l'annuaire 4.

Lorsque l'entité 8 souhaite modifier un objet dans l'annuaire 4, l'entité 8 commence par appeler la fonction 15 d'accès. La fonction 15 d'accès retrouve l'objet dans l'annuaire 4 et en transfère une copie dans la mémoire tampon 18. La fonction 15 d'accès indique par code retour à l'entité 8 que l'objet a été correctement transféré dans la mémoire tampon 18. L'entité 8 appelle alors la fonction 14 de gestion de rangement : elle transmet à la structure de communication 17 les caractéristiques modifiées de l'attribut standard 6 ou du composant 21 de l'attribut opaque 20 concerné. La fonction 14 de rangement extrait les paramètres qui lui sont nécessaires de la structure de communication 17 et charge la description compilée correspondante dans la mémoire tampon 18. La fonction 14 de rangement modifie l'objet en question enregistré dans la mémoire tampon 18 par la fonction d'accès 15, comme indiqué par les paramètres de la structure de communication transmis par l'entité 8 et conformément à la description compilée. La fonction de rangement peut également faire appel au module de sécurité 19 en cas de signature ou de chiffrement des informations contenues dans l'objet concerné. Lorsque l'objet est prêt à être transféré dans l'annuaire 4, l'entité 8 a le choix entre valider la création ou la vérifier sachant qu'en validant, l'opération de vérification est également réalisée. La vérification avant validation permet d'obtenir précisément toutes les erreurs réalisées. L'opération de vérification est effectuée par la fonction de gestion de vérification. Lorsque l'entité 8 valide la modification, la fonction 15 d'accès transfère l'objet modifié de la mémoire tampon 18 dans l'annuaire 4.

Lorsque l'entité 8 souhaite supprimer un attribut 6, 20 ou un composant 21 de l'annuaire 4, l'entité 8 commence par appeler la fonction 15 d'accès. La fonction 15 d'accès retrouve l'objet dans l'annuaire 4 et en transfère une copie dans la mémoire tampon 18. La fonction 15 d'accès indique par code retour à l'entité 8 que l'objet a été correctement transféré dans la mémoire tampon 18. L'entité 8 appelle alors la fonction 14 de gestion de suppression : elle transmet à la structure de communication les caractéristiques de l'attribut standard 6 ou du composant 21 à supprimer de l'attribut opaque 20 concerné. La fonction 14 de suppression extrait les paramètres qui lui sont nécessaires de la structure de communication 17 et charge la description compilée correspondante dans la mémoire tampon 18. La fonction 14 de suppression supprime le composant 21 ou l'attribut 6,20 en question enregistré dans la mémoire tampon 18 par la fonction d'accès 15, comme indiqué par les paramètres de la structure de communication transmis par l'entité 8 et conformément à la description compilée. La fonction 15 d'accès supprime l'attribut 6, 20 ou le composant 21 indiqué dans la mémoire tampon 18 dans l'annuaire 4.

Lorsque l'entité 8 souhaite lire un objet dans l'annuaire 4, l'entité 8 commence par appeler la fonction 15 d'accès. La fonction 15 d'accès retrouve l'objet dans l'annuaire 4 et en transfère une copie dans la mémoire tampon 18. La fonction d'accès indique par code retour à l'entité 8 que l'objet a été correctement transféré dans la mémoire tampon 18. L'entité 8 appelle alors la fonction de gestion 14 de lecture. Si les paramètres fournis par l'entité 8 sont suffisants et en particulier si le nom interne de l'attribut standard ou du composant a été donné, la fonction de lecture n'a pas besoin de charger la description compilée. Dans le cas contraire, la description compilée est chargée de manière à obtenir la correspondance entre le nom interne et l'identifiant. La fonction 14 de lecture vérifie éventuellement si l'entité 8 a le droit de lire les informations concernées en faisant appel au module de sécurité 19. Elle déchiffre éventuellement lesdites informations et vérifie leur intégrité. Elle retrouve les informations souhaitées de l'objet en parcourant l'ensemble 24 des valeurs à l'aide de l'identifiant ou libellé et de la longueur utile. Elle place lesdites informations dans la structure de communication 17. L'entité 8 n'a plus qu'à lire les informations requises dans la structure de communication 17.

Selon un développement de l'invention, les versions de description antérieures à une version utilisée à un instant t sont archivées dans un répertoire séparé . Les versions de description antérieures peuvent être archivées par exemple en ajoutant au nom un suffixe représentant le numéro de version.

La présente invention concerne donc un procédé de gestion de l'annuaire 4 ou équivalent comportant les objets 5 caractérisés par les attributs standards 6, l'annuaire 4 étant apte à être interrogé par l'entité 8, ce procédé caractérisant les objets 5 par les attributs spécifiques 20 dits attributs opaques 20, présentant la même structure externe que les attributs standards 6 et dont la structure interne permet de définir et administrer les composants 21 de manière indépendante à l'annuaire 4.

Le procédé tel que défini précédemment définit et administre les composants 21 au moyen de l'interface de programmation au niveau applicatif API 13 entre l'annuaire 4 et l'entité 8.

En outre, il définit la structure interne de l'attribut opaque en trois parties :
- l'en-tête 22 délivrant des informations générales sur l'attribut opaque 20 ;
- la table 23 de caractéristiques des composants 21 ;
- l'ensemble 24 de valeurs des composants 21 indiqués dans la table 23.

Il intégre dans la structure interne de l'attribut opaque 20 des informations de sécurité assurant l'intégrité, l'origine et/ou la confidentialité des composants 21 contenus dans l'attribut 20.

Il intégre dans la structure interne de l'attribut opaque 20 des informations permettant la gestion de différentes versions du contenu de l'attribut 20.

Il intégre dans la structure interne de l'attribut opaque 20 le type de codage de chaque composant 21 contenu dans ledit attribut 20.

Il consiste en outre à lire ou mettre à jour, à savoir créer, modifier, lire ou supprimer, un attribut standard 6, un attribut opaque ou un composant 21 dans un attribut opaque 20 de manière indépendante à l'annuaire 4 au moyen des fonctions de gestion 14 des attributs opaques 20 appelées par l'entité 8.

Les fonctions 14 de gestion s'appuient sur la description 25 des attributs 6,20 pour effectuer leur mise à jour, ainsi que leur lecture si l'entité 8 n'a pas fourni les informations suffisantes pour accéder directement à l'attribut concerné dans l'annuaire 4.

Le procédé compile la description 25 à l'aide d'un compilateur 10.

Il intégre dans la description 25 des informations de sécurité assurant l'intégrité, l'origine et/ou la confidentialité des composants 21 contenus dans l'attribut 20.

Au moyen des fonctions 15 d'accès à l'annuaire 4, il extrait, introduit, modifie ou supprime des attributs 6,20 dans l'annuaire 4 conformément aux opérations effectuées par les fonctions 14 de gestion.

La présente invention porte également sur le système informatique permettant la mise en oeuvre dudit procédé.

La présente invention se rapporte à un système informatique comprenant au moins une machine 2 munie de l'annuaire 4 ou équivalent susceptible d'être interrogé par l'entité 8, comprenant l'interface de programmation au niveau applicatif API 13 entre l'annuaire 4 et l'entité 8 comprenant les fonctions 15 d'accès à l'annuaire 4 et les fonctions 14 de gestion d'attributs standards 6 et/ou d'attributs opaques 20, adapté pour mettre en oeuvre ledit procédé.

L'entité 8 communique avec l'interface API 13 au travers de la structure de communication 17 enregistrée dans les moyens de mémorisation 16.

Le système comprend les moyens 11 de stockage des fichiers source 12 et le compilateur 10 desdits fichiers source 12.

### ANNEXES

### Exemples de fichier source 12.

### / description 25 de l'item BASE de la classe d'objets Personne

CLASS=PERSONNE
ITEM=BASE
VERSION=001
LANGUAGES=EN,FR

### / description 21 des attributs standards 6 de l'item BASE

ATT=CNAME
OID=0001
XNM=commonName
HID=N
LBL=EN="User common name"
LBL=FR="ident X500 de l'usager"
TYP=TEXT
MDT=Y
RNG=64
SZF=24
CAS=FREE

ATT=SURNAME
OID=0002
XNM=surname
HID=N
LBL=EN="User surname"
LBL=FR="Patronyme X500 de l'usager"
TYP=TEXT
MDT=Y
RNG=32
SZF=16
CAS=LOW

ATT=TELEPHONE
OID=0003
XNM= telephoneNumber
HID=N
LBL=EN="User telephone"
LBL=FR="Telephone usager"
MDT=N
RNG=16
SZF=16
CAS=UP

### / description 25 d'un item attribut opaque SECITEM 20 de la classe d'objets PERSON

### / description des composants de l'attribut opaque, dans l'item SECITEM

CLASS=PERSON
ITEM=SECITEM
VERSION=001
LANGUAGES=EN,FR

### / description 25 des attributs opaques 20 de l'item

### / définition de la liste des ressources accordées

ATT=LISTRAL
OID=100
LBL=EN="Resource allocated list"
LBL=FR="Liste des ressources allouees"
TYP=LIST
PRS=PCM
RNG=500

### / classe des ressources de la liste

ATT=OBJECTCLASS
OID=101
LBL=EN="Resource class"
LBL=FR="Classe de la ressource"
TYP=TEXT
RNG=48
CAS=UP

### / nom de la ressource

ATT=OBJECTID
OID=102
LBL=EN="Resource name"
LBL=FR="Nom de la ressouce"
TYP=TEXT
MDT=N
SZF=48
RNG=96
CAS=UP

### / fin description de la liste (d'une occurrence liste)

ATT=ENDOFLIST
OID=100
HID=Y
TYP=END

### / exemple de description des droits d'accès aux noeuds et objets

### / droit sur le niveau noeud

ATT=NODERGT
OID=102
HID=N
LBL=EN="Rights on node"
LBL=FR="Droits sur le noeud"
TYP=TEXT
MDT=N
RNG=8
CAS=UP

ATT=CHILDGRGT
OID=103
HID=N
LBL=EN="General rights on attached objects"
LBL=FR="Droits généraux sur les objets rattachées"
TYP=TEXT
MDT=N
RNG=8
CAS=UP

ATT=CLASSRGT
OID=104
HID=N
LBL=EN="Specific rights on attached objects"
LBL=FR="Droits spécifiques sur les objets rattachées"
TYP=TEXT
MDT=N
RNG=8
CAS=UP

## Revendications

1. Procédé de gestion d'une base de données ou annuaire (4), dans un environnement d'ordinateur orienté objet, comportant des objets (5) **caractérisés par** des attributs standards (6), la base de données ou l'annuaire (4) étant aptes à être interrogés par une application ou un utilisateur appelés entité (8),
le procédé comprenant :
- au moins une étape de caractérisation des objets (5) par des attributs spécifiques (20) dits attributs opaques (20), présentant la même structure externe que les attributs standards (6) et dont la structure interne est déterminée, indépendamment du et sans intervenir sur le schéma de la base de données ou annuaire (4), et susceptible d'être exploitée par une interface de programmation API (13) entre la base de données ou annuaire (4) et l'entité (8), l'interface API (13) comprenant des fonctions d'accès (15) et de gestion (14), lesdites fonctions de gestion (14) étant prévues pour l'exploitation des attributs opaques de manière indépendante de la base de données ou annuaire (4) et sans intervenir sur son schéma,
- au moins une étape d'appel des fonctions d'accès et de gestion des attributs opaques (20) par l'entité (8) pour définir et administrer des composants (21) dans les attributs opaques indépendamment de la base de données ou annuaire (4) et sans intervenir sur son schéma,
**caractérisé en ce qu'**il consiste à définir la structure interne de l'attribut opaque en trois parties :
- un en-tête (22) délivrant des informations générales sur l'attribut opaque (20);
- une table (23) de caractéristiques des composants (21) ;
- un ensemble (24) de valeurs des composants (21) indiqués dans la table (23).

2. Procédé selon l'une des revendications 1, **caractérisé en ce qu'**il consiste à intégrer dans la structure interne de l'attribut opaque (20) des informations de sécurité assurant l'intégrité, l'origine et/ou la confidentialité des composants (21) contenus dans l'attribut (20).

3. Procédé selon la revendication 1 ou 2, **caractérisé en ce qu'**il consiste à intégrer dans la structure interne de l'attribut opaque (20) des informations permettant la gestion de différentes versions du contenu de l'attribut (20).

4. Procédé selon l'une des revendications 1 à 3, **caractérisé en ce qu'**il consiste à intégrer dans la structure interne de l'attribut opaque (20) le type de codage de chaque composant (21) contenu dans ledit attribut (20).

5. Procédé selon l'une des revendications 1 à 4, **caractérisé en ce qu'**il consiste à lire ou mettre à jour, à savoir créer, modifier, lire ou supprimer, un attribut standard (6), un attribut opaque ou un composant (21) dans un attribut opaque (20) de manière indépendante à la base (4) au moyen de fonctions de gestion (14) des attributs opaques (20) appelées par l'entité (8).

6. Procédé selon la revendication 5, **caractérisé en ce que** les fonctions (14) de gestion s'appuient sur une description (25) des attributs (6, 20) pour effectuer leur mise à jour, ainsi que leur lecture si l'entité (8) n'a pas fourni les informations suffisantes pour accéder directement à l'attribut concerné dans la base (4).

7. Procédé selon la revendication 6, **caractérisé en ce qu'**il consiste à compiler la description (25) à l'aide d'un compilateur (10).

8. Procédé selon l'une des revendications 6 ou 7, **caractérisé en ce qu'**il consiste à intégrer dans la description (25) des informations de sécurité assurant l'intégrité, l'origine et/ou la confidentialité des composants (21) contenus dans l'attribut (20).

9. Procédé selon la revendication 5, **caractérisé en ce qu'**il consiste, au moyen de fonctions (15) d'accès à la base (4), à extraire, introduire, modifier ou supprimer des attributs (6,20) dans la base (4) conformément aux opérations effectuées par les fonctions (14) de gestion.

10. Système informatique comprenant une base de données ou annuaire (4), dans un environnement d'ordinateur orienté objet, comportant des objets (5) **caractérisés par** des attributs standards (6), la base de données ou l'annuaire (4) étant aptes à être interrogés par une application ou un utilisateur appelés entité (8),
le système informatique comprenant en outre :
- des moyens de caractérisation des objets (5) par des attributs spécifiques (20) dits attributs opaques (20), présentant la même structure externe que les attributs standards (6) et dont la structure interne est déterminée, indépendamment du et sans intervenir sur le schéma de la base de données ou annuaire (4), et susceptible d'être exploitée par une interface de programmation API (13) entre la base de données ou annuaire (4) et l'entité (8), l'interface API (13) comprenant des fonctions d'accès (15) et de gestion (14), lesdites fonctions de gestion (14) étant prévues pour l'exploitation des attributs opaques de manière indépendante de la base de données ou annuaire (4) et sans intervenir sur son schéma,
- des moyens d'appel des fonctions d'accès et de gestion des attributs opaques (20) par l'entité (8) pour définir et administrer des composants (21) dans les attributs opaques indépendamment de la base de données ou annuaire (4) et sans intervenir sur son schéma,
**caractérisé en ce que** la structure interne de l'attribut opaque est définie en trois parties :
- un en-tête (22) délivrant des informations générales sur l'attribut opaque (20);
- une table (23) de caractéristiques des composants (21) ;
- un ensemble (24) de valeurs des composants (21) indiqués dans la table (23).

11. Système selon la revendication 10, **caractérisé en ce que** l'entité (8) communique avec l'interface API (13) au travers d'une structure de communication (17) enregistrée dans des moyens de mémorisation (16).

12. Système selon l'une des revendications 10 ou 11, **caractérisé en ce qu'**il comprend des moyens (11) de stockage de fichiers source (12) et un compilateur (10) desdits fichiers source (12).

## Claims

1. Method for managing a database or directory (4), in an object-oriented computer environment, including objects (5) **characterised by** standard attributes (6), the database or the directory (4) being capable of being interrogated by an application or a user designated an entity (8),
the method comprising:
- at least one step for characterising the objects (5) by specific attributes (20) called opaque attributes (20), exhibiting the same external structure as the standard attributes (6) and the internal structure of which is determined, independently of and without intervention in the configuration of the database or directory (4), and capable of being utilised by an API programming interface (13) between the database or directory (4) and the entity (8), the API interface comprising access functions (15) and management functions (14), said management functions (14) being provided for utilisation of the opaque attributes independently of the database or directory (4) and without intervention in its configuration,
- at least one step for calling up the access functions and management functions of the opaque attributes (20) by the entity (8) to define and administer components (21) in the opaque attributes independently of the database or directory (4) and without intervention in its configuration,
**characterised in that** it consists in defining the internal structure of the opaque attribute in three parts:
- a heading (22) providing general information on the opaque attribute (20);
- a table (23) of characteristics of the components (21);
- a set (24) of values of the components (21) indicated in the table (23).

2. Method according to claim 1, **characterised in that** it consists in integrating in the internal structure of the opaque attribute (20) security information ensuring the integrity, the origin and/or the confidentiality of the components (21) contained in the attribute (20).

3. Method according to claim 1 or 2, **characterised in that** it consists in integrating in the internal structure of the opaque attribute (20) information allowing the management of different versions of the content of the attribute (20).

4. Method according to one of claims 1 to 3, **characterised in that** it consists in integrating in the internal structure of the opaque attribute (20) the type of coding of each component (21) contained in said attribute (20).

5. Method according to one of claims 1 to 4, **characterised in that** it consists in reading or updating, namely creating, modifying, reading or deleting, a
standard attribute (6), an opaque attribute or a component (21) in an opaque attribute (20) independently in the base (4) by means of management functions (14) of the opaque attributes (20) called up by the entity (8).

6. Method according to claim 5, **characterised in that** the management functions (14) are reliant on a description (25) of the attributes (6, 20) to effect their updating and their reading if the entity (8) has not supplied sufficient information to access directly the attribute concerned in the base (4).

7. Method according to claim 6, **characterised in that** it consists in compiling the description (25) with the aid of a compiler (10).

8. Method according to one of claims 6 or 7, **characterised in that** it consists in integrating in the description (25) security information ensuring the integrity, the origin and/or the confidentiality of the components (21) contained in the attribute (20).

9. Method according to claim 5, **characterised in that** it consists, by means of the functions (15) for access to the base (4), in extracting, introducing, modifying or deleting attributes (6, 20) in the base (4) in conformity with the operations carried out by the management functions (14).

10. Computer system comprising a database or directory (4), in an object-oriented computer environment, including objects (5) **characterised by** standard attributes (6), the database or directory (4) being capable of being interrogated by an application or a user designated an entity (8),
the computer system also comprising:
- means for characterising the objects (5) by specific attributes (20) called opaque attributes (20), exhibiting the same external structure as the standard attributes (6) and the internal structure of which is determined, independently of and without intervention in the configuration of the database or directory (4), and capable of being utilised by an API programming interface (13) between the database or directory (4) and the entity (8), the API interface (13) comprising access functions (15) and management functions (14), said management functions (14) being provided for utilisation of the opaque attributes independently of the database or directory (4) and without intervention in its configuration,
- means for calling up the access functions and management functions of the opaque attributes (20) by the entity (8) to define and administer components (21) in the opaque attributes independently of the database or directory (4) and without intervention in its configuration,
**characterised in that** the internal structure of the opaque attribute is defined in three parts:
- a heading (22) providing general information on the opaque attribute (20);
- a table (23) of characteristics of the components (21);
- a set (24) of values of the components (21) indicated in the table (23).

11. System according to claim 10, **characterised in that** the entity (8) communicates with the API interface (13) through a communication structure (17) recorded in memorising means (16).

12. System according to one of claims 10 or 11, **characterised in that** it comprises means (11) for storing source files (12) and a compiler (10) for said source files (12).

## Patentansprüche

1. Verfahren zur Verwaltung einer Datenbank oder eines Telefonverzeichnisses (4) in einer objektorientierten Computerumgebung, mit durch Standardattribute (6) gekennzeichneten Objekten (5), wobei die Datenbank oder das Telefonverzeichnis (4) durch eine Anwendung oder einen Benutzer, die Entität (8) genannt werden, abgefragt werden kann,
wobei das Verfahren Folgendes umfasst:
- mindestens einen Schritt zur Charakterisierung der Objekte (5) durch opake Attribute (20) genannte spezifische Attribute (20), die die gleiche äußere Struktur haben wie die Standardattribute (6) und deren innere Struktur unabhängig von dem Schema der Datenbank oder des Telefonverzeichnisses (4) und ohne Eingriff darauf bestimmt wird und von einer API-Programmierschnittstelle (13) zwischen der Datenbank oder dem Telefonverzeichnis (4) und der Entität (8) genutzt werden kann, wobei die API-Schnittstelle (13) Zugangsfunktionen (15) und Verwaltungsfunktionen (14) umfasst, wobei die Verwaltungsfunktionen (14) zur Nutzung der opaken Attribute unabhängig von der Datenbank oder dem Telefonverzeichnis (4) und ohne Eingriff auf ihr/sein Schema vorgesehen sind,
- mindestens einen Schritt zum Aufrufen der Funktionen für den Zugang zu den und zur Verwaltung der opaken Attribute (20) durch die Entität (8), um Komponenten (21) in den opaken Attributen unabhängig von der Datenbank oder dem Telefonverzeichnis (4) und ohne Eingriff auf ihr/sein Schema zu definieren und zu verwalten,
**dadurch gekennzeichnet, dass** es darin besteht, die innere Struktur des opaken Attributs in drei Teilen zu definieren:
- einem Kopf (22), der allgemeine Informationen über das opake Attribut (20) gibt,
- einer Tabelle (23) der Merkmale der Komponenten (21),
- einer Gruppe (24) von Werten der in der Tabelle (23) angegebenen Komponenten (21).

2. Verfahren nach Anspruch 1, **dadurch gekennzeichnet, dass** es darin besteht, in die innere Struktur des opaken Attributs (20) Sicherheitsinformationen zu integrieren, die die Integrität, den Ursprung und/oder die Vertraulichkeit der im Attribut (20) enthaltenen Komponenten (21) gewährleisten.

3. Verfahren nach Anspruch 1 oder 2, **dadurch gekennzeichnet, dass** es darin besteht, in die innere Struktur des opaken Attributs (20) Informationen zu integrieren, die die Verwaltung verschiedener Versionen des Inhalts des Attributs (20) ermöglichen.

4. Verfahren nach einem der Ansprüche 1 bis 3, **dadurch gekennzeichnet, dass** es darin besteht, in die innere Struktur des opaken Attributs (20) die Kodierungsart jeder im Attribut (20) enthaltenen Komponente (21) zu integrieren.

5. Verfahren nach einem der Ansprüche 1 bis 4, **dadurch gekennzeichnet, dass** es darin besteht, ein Standardattribut (6), ein opakes Attribut oder eine Komponente (21) in einem opaken Attribut (20) unabhängig von der Datenbank (4) mit von der Entität (8) aufgerufenen Funktionen (14) zur Verwaltung der opaken Attribute (20) zu lesen oder zu aktualisieren, nämlich zu erzeugen, zu ändern, zu lesen oder zu entfernen.

6. Verfahren nach Anspruch 5, **dadurch gekennzeichnet, dass** sich die Verwaltungsfunktionen (14) auf eine Beschreibung (25) der Attribute (6, 20) stützen, um die Aktualisierung oder das Lesen dieser Attribute durchzuführen, wenn die Entität (8) keine ausreichenden Informationen für den direkten Zugang zum betreffenden Attribut in der Datenbank (4) geliefert hat.

7. Verfahren nach Anspruch 6, **dadurch gekennzeichnet, dass** es darin besteht, die Beschreibung (25) mit einem Compiler (10) zu kompilieren.

8. Verfahren nach einem der Ansprüche 6 oder 7, **dadurch gekennzeichnet, dass** es darin besteht, in die Beschreibung (25) Sicherheitsinformationen zu integrieren, die die Integrität, den Ursprung und/oder die Vertraulichkeit der im Attribut (20) enthaltenen Komponenten (21) gewährleisten.

9. Verfahren nach Anspruch 5, **dadurch gekennzeichnet, dass** es darin besteht, mit Funktionen (15) für den Zugang zur Datenbank (4) Attribute (6, 20) in der Datenbank (4) in Übereinstimmung mit den von den Verwaltungsfunktionen (14) durchgeführten Operationen abzurufen, einzugeben, zu ändern oder zu entfernen.

10. Informatiksystem, mit einer Datenbank oder einem Telefonverzeichnis (4) in einer objektorientierten Computerumgebung mit durch Standardattribute (6) gekennzeichneten Objekten (5), wobei die Datenbank oder das Telefonverzeichnis (4) durch eine Anwendung oder einen Benutzer, die Entität (8) genannt werden, abgefragt werden kann,
wobei das Informatiksystem ferner Folgendes aufweist:
- Mittel zur Charakterisierung der Objekte (5) durch opake Attribute (20) genannte spezifische Attribute (20), die die gleiche äußere Struktur haben wie die Standardattribute (6) und deren innere Struktur unabhängig von dem Schema der Datenbank oder des Telefonverzeichnisses (4) und ohne Eingriff darauf bestimmt wird und von einer API-Programmierschnittstelle (13) zwischen der Datenbank oder dem Telefonverzeichnis (4) und der Entität (8) genutzt werden kann, wobei die API-Schnittstelle (13) Zugangsfunktionen (15) und Verwaltungsfunktionen (14) umfasst, wobei die Verwaltungsfunktionen (14) zur Nutzung der opaken Attribute unabhängig von der Datenbank oder dem Telefonverzeichnis (4) und ohne Eingriff auf ihr/sein Schema vorgesehen sind,
- Mittel zum Aufrufen der Funktionen für den Zugang zu den und zur Verwaltung der opaken Attribute (20) durch die Entität (8), um Komponenten (21) in den opaken Attributen unabhängig von der Datenbank oder dem Telefonverzeichnis (4) und ohne Eingriff auf ihr/sein Schema zu definieren und zu verwalten,
**dadurch gekennzeichnet, dass** die innere Struktur des opaken Attributs in drei Teilen definiert ist:
- einem Kopf (22), der allgemeine Informationen über das opake Attribut (20) gibt,
- einer Tabelle (23) der Merkmale der Komponenten (21),
- einer Gruppe (24) von Werten der in der Tabelle (23) angegebenen Komponenten (21).

11. System nach Anspruch 10, **dadurch gekennzeichnet, dass** die Entität (8) über eine in Speichermitteln (16) gespeicherte Kommunikationsstruktur (17) mit der API-Schnittstelle (13) kommuniziert.

12. System nach einem der Ansprüche 10 oder 11, **dadurch gekennzeichnet, dass** es Mittel (11) zum Speichern von Quelldateien (12) und einen Compiler (10) der Quelldateien (12) aufweist.
